# EUROPEAN PATENT APPLICATION

(11) **EP 2 106 119 A2**
(43) Date of publication of application: **30.09.2009**
(21) Application number: 09003519.7
(22) Date of filing: 11.03.2009
(51) Int. Cl.: H04N 1/44

(54) **Image encryption apparatus and image decryption apparatus**

(30) Priority: 25.03.2008 JP 2008077380
(71) Applicant: Fujitsu Limited, Kawasaki-shi, Kanagawa 211-8588 (JP)
(72) Inventor: Nakagata, Shohei, Kawasaki-shi, Kanagawa 211-8588 (JP); Anan, Taizo, Kawasaki-shi, Kanagawa 211-8588 (JP); Kuraki, Kensuke, Kawasaki-shi, Kanagawa 211-8588 (JP); Takahashi, Jun, Kawasaki-shi, Kanagawa 211-8588 (JP)
(74) Representative: HOFFMANN EITLE

(57) **Abstract**

In an image encryption apparatus, each of pixel-value inverse-converters applies pixel-value inverse-conversion on an input image in each of previously-encrypted areas. An image combiner superimposes images with inversely-converted pixels in the previously-encrypted areas to the input image to obtain a ready-to-encrypt image. An image encryptor scrambles blocks in the ready-to-encrypt image. A pixel-value converter applies pixel-value conversion on each of scrambled blocks to obtain a multiply-encrypted image. In an image decryption apparatus, a pixel-value inverse-converter applies pixel-value inverse-conversion on each scrambled block in the multiply-encrypted image to obtain a dot-erased image. An image decryptor inversely scrambles the scrambled blocks in the dot-erased image to obtain a decrypted image. Each of pixel-value converters applies pixel-value conversion on the decrypted image in each of previously-encrypted areas. An image combiner superimposes images with converted pixels in the previously-encrypted areas to the decrypted image to obtain a previously-encrypted image.

## Description

### FIELD

The embodiments discussed herein are related to a technology for visually encrypting/decrypting a part of a printed matter or a digital image, particularly to an image encryption/decryption technology that multiply-encrypts and prints an image.

### BACKGROUND

In progress of the information-oriented society, leakage of secret information becomes a serious problem and development of a technology for preventing information leakage is demanded. With respect to digital data, technologies for encrypting data so as to prevent contents of information from being peeped even if the information has fallen into the hands of a third party are developed and already used as advantageous means for preventing information leakage.

However, technologies for preventing information leakage of printed matters printed on a paper medium are not sufficiently developed and are not put into practical use. Actually, it is said that about half of information leakage occurs from printed matters, and development of technologies for preventing information leakage of printed matters like as the digital data is urgently demanded.

Specific examples for which countermeasures against information leakage of printed matters are demanded includes bills for purchased goods, statements for credit cards, medical charts, school grade reports, and name lists. According to embodiments of the present invention, information leakage may be prevented by encrypting an important part thereof.

### SUMMARY

An object of the present invention is to provide an encryption/decryption technology which allows high precision decryption of multiply-encrypted image on printed matters.

According to an aspect of the present invention, provided is an image encryption apparatus for encrypting image data of an input image. The image encryption apparatus includes an encryption area assignor, a multiple encryption area detector, a pixel-value inverse-converter, an image encryptor, and a pixel-value converter. The encryption area assignor assigns an encryption area on the input image. Image data in the encryption area is to be encrypted. The multiple encryption area detector detects a previously encrypted area in an assigned encrypted area. The pixel-value inverse-converter applies pixel-value inverse-conversion on a pixel of the input image in a detected previously encrypted area, wherein the pixel has been applied with pixel-value conversion. The image encryptor encrypts image data of the input image in the assigned encrypted area, wherein a pixel of the input image has been applied with the pixel-value inverse-conversion. The pixel-value converter applies the pixel-value conversion on a pixel of an encrypted image to generate a multiply-encrypted image.

According to another aspect of the present invention, provided is an image decryption apparatus for decrypting image data of the multiply-encrypted image generated by the image encryption apparatus. The image decryption apparatus includes an encrypted area detector, a pixel-value inverse-converter, an image decryptor, a multiple encryption area detector, and a pixel-value converter. The encrypted area detector detects an encryption area in the multiply-encrypted image. The pixel-value inverse-converter applies the pixel-value inverse-conversion on a pixel of the multiply-encrypted image in a detected encryption area, wherein the pixel has been applied with the pixel-value conversion. The image decryptor decrypts image data of the multiply-encrypted image in the detected encryption area, wherein a pixel in the image data has been applied with the pixel-value inverse-conversion to generate a decrypted image. The multiple encryption area detector detects the previously encrypted area of the decrypted image. The pixel-value converter applies the pixel-value conversion on a pixel of the decrypted image in the previously encrypted area to generate a previously-encrypted image.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF THE DRAWINGS

Fig. 1 is a block diagram illustrating a system configuration of an image encryption apparatus according to a first embodiment of the present invention;
Fig. 2 is a diagram illustrating an example of a data structure of an input image according to a first embodiment of the present invention;
Fig. 3 is a diagram illustrating an example of generating an input image to be multiply-encrypted according to a first embodiment of the present invention;
Fig. 4 is a diagram illustrating an example of operations in an encryption process according to a first embodiment of the present invention;
Fig. 5 is a diagram illustrating an example of operations in encryption area assignment and encrypted area detection according to a first embodiment of the present invention;
Fig. 6 is a diagram illustrating an example of operations in adjustment of start coordinates of an encryption area according to a first embodiment of the present invention;
Fig. 7 is a diagram illustrating an example of operations in pixel-value inverse-conversion according to a first embodiment of the present invention;
Fig. 8 is a diagram illustrating a flow of operations in pixel-value inverse-conversion and image combine according to a first embodiment of the present invention;
Fig. 9 is a diagram illustrating an example of operations in image encryption and pixel-value conversion according to a first embodiment of the present invention;
Fig. 10 is a diagram illustrating an example of multiple (triple) encryptions according to a first embodiment of the present invention;
Fig. 11 is a diagram illustrating an example of multiple (partially overlapped) encryptions according to a first embodiment of the present invention;
Fig. 12 is a diagram illustrating an example of adding markers for area detection at four corners of an encrypted image according to a first embodiment of the present invention;
Fig. 13 is a block diagram illustrating a system configuration of an image decryption apparatus according to a second embodiment of the present invention;
Fig. 14 is a diagram illustrating an example of expansion/contraction and distortion of an encrypted image caused by printing or scanning a printed matter according to a second embodiment of the present invention;
Fig. 15 is a diagram illustrating an example of operations in pixel-value inverse-conversion and image decryption according to a second embodiment of the present invention;
Fig. 16 is a diagram illustrating an example of operations in encryption area detection, pixel-value conversion, and image combine according to a second embodiment of the present invention;
Fig. 17 is a diagram illustrating a flow of operations in pixel-value conversion and image combine according to a second embodiment of the present invention;
Fig. 18 is a diagram illustrating an example of operations in iterative decryption according to a second embodiment of the present invention;
Fig. 19 is a block diagram illustrating a system configuration of an image encryption apparatus according to a technology discussed in Japanese Laid-open Patent Publication No. 2008-301044 and an application technology thereof;
Fig. 20 is a diagram illustrating an example of processing of an encryption area assignor illustrated in Fig. 19;
Fig. 21 is a diagram illustrating an example of processing of an image encryptor illustrated in Fig. 19;
Fig. 22 is a diagram illustrating an example of processing of a pixel-value converter illustrated in Fig. 19;
Fig. 23 is a diagram illustrating an example of encrypted image generated through an encryption process whose functional blocks are illustrated in Fig. 19;
Fig. 24 is a block diagram illustrating a system configuration of an image decryption apparatus according to a technology discussed in Japanese Laid-open Patent Publication No. 2008-301044 and an application technology thereof;
Fig. 25 is a diagram illustrating an example of processing of an encrypted area detector illustrated in Fig. 24; and
Fig. 26 is a diagram illustrating problems in multiple encryptions.

### DESCRIPTION OF EMBODIMENTS

Japanese Laid-open Patent Publication No. 2008-301044 applied by the applicant of the present invention discusses a technology for encrypting printed matters. According to the technology discussed in Japanese Laid-open Patent Publication No. 2008-301044, an image area for data therein to be encrypted is divided into a plurality of blocks, and the blocks are scrambled on the basis of a parameter obtained from an input password. Thereafter, pixel values of pixels in the image area regularly converted, thereby generating an encrypted image. A peculiar pattern generated by the regular conversion of the pixel values becomes an index for identifying a specific position of the encrypted image at the time of decryption, which may allow high precision decryption by positional correction even when the printed encrypted image is distorted by printing or scanning.

Further, an application technology enabling decryption of printed encrypted images with high precision and high quality by applying pixel-value conversion discussed in Japanese Laid-open Patent Publication No. 2008-301044 on the basis of a histogram of pixel values of surrounding pixels is devised by the inventors of the present invention.

First of all, a brief discussion will be given of the technology in Japanese Laid-open Patent Publication No. 2008-301044 and an encryption/decryption method as the application technology thereof.

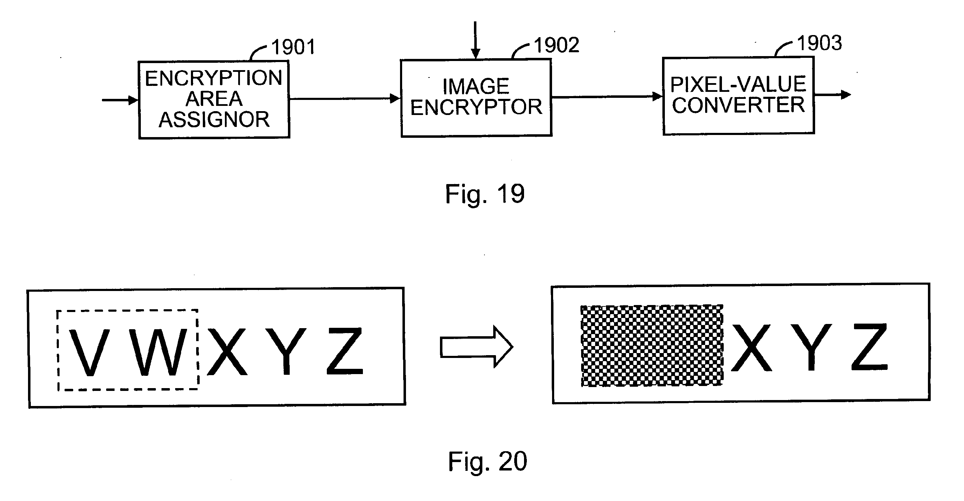

Fig. 19 is a block diagram illustrating a system configuration of an image encryption apparatus according to a technology discussed in Japanese Laid-open Patent Publication No. 2008-301044 and an application technology thereof. Fig. 20 is a diagram illustrating an example of processing of an encryption area assignor illustrated in Fig. 19.

An encryption area assignor 1901 selects an encrypted area, as illustrated with a broken line in Fig. 20.

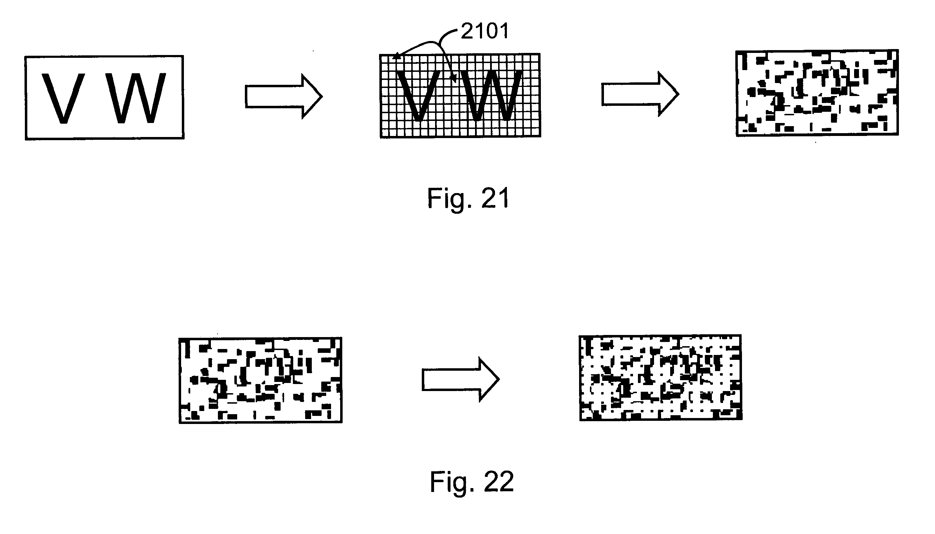

Subsequently, an image encryptor 1902 encrypts data in a selected area with an encryption key. Fig. 21 is a diagram illustrating an example of processing of an image encryptor illustrated in Fig. 19. As illustrated in Fig. 21, the selected area is divided into small areas, and exchange (scramble) 2101 of the small areas is applied on the basis of the encryption key, thereby encrypting an image in the selected area.

Further, a pixel-value converter 1903 in Fig. 19 regularly converts pixel values of pixels of the image encrypted by the image encryptor 1902. Fig. 22 is a diagram illustrating an example of processing of a pixel-value converter illustrated in Fig. 19. As illustrated in Fig. 22, pixel values of pixels at a predefined interval in the vertical and horizontal directions in an encrypted image are converted. In the example illustrated in Fig. 22, pixel values of pixels at top-left corner of each small area are converted. Pixel values are regularly converted as mentioned above so as to easily identify specific position of the encrypted area by detecting, when decrypting the printed encrypted image, a peculiar pattern generated due to the pixel-value conversion.

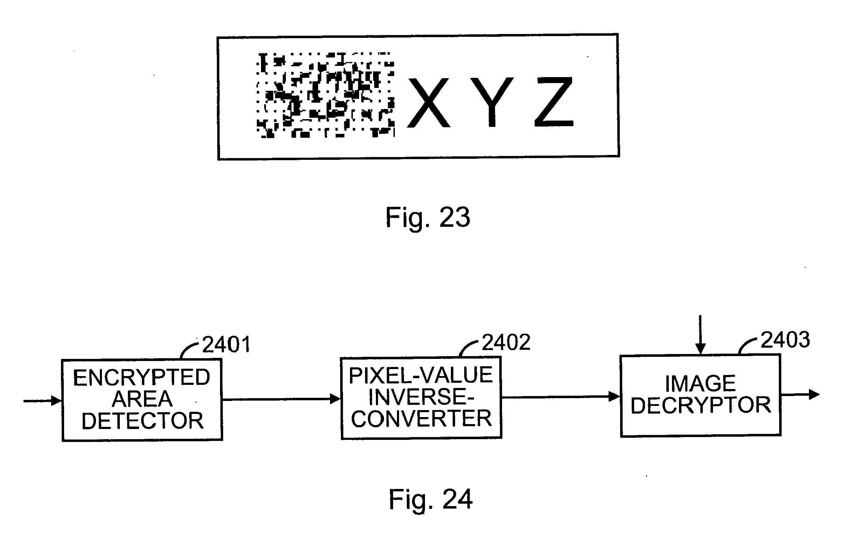

An example of an encrypted image is illustrated in Fig. 23.

Fig. 24 is a block diagram illustrating a system configuration of an image decryption apparatus according to a technology discussed in Japanese Laid-open Patent Publication No. 2008-301044 and an application technology thereof.

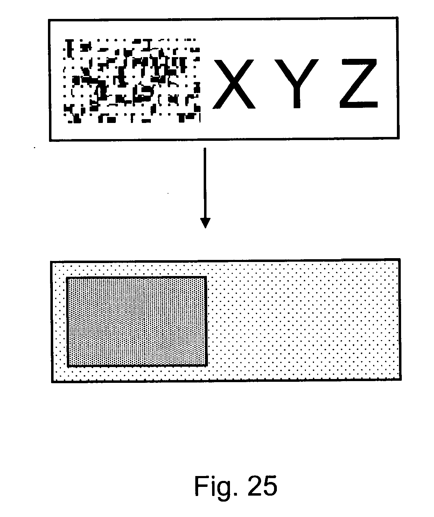

First of all, an encrypted area detector 2401 detects an area of the encrypted image and a specific position in the encrypted area. Fig. 25 is a diagram illustrating an example of processing of an encrypted area detector illustrated in Fig. 24. As illustrated in Fig. 25, periodicity of a dot pattern appeared due to the pixel-value conversion may be checked and a part with strong periodicity maybe identified as the encrypted area. Further, dots aligned in grid alignment in the encrypted area are individually extracted so as to correct distortion and expansion/contraction of the encrypted image resulted from printing.

Subsequently, a pixel-value inverse-converter 2402 inversely converts pixel values of pixels in the area applied pixel-value conversion by the pixel-value converter 1903 (Fig. 19) at the time of encryption.

Finally, an image decryptor 2403 converts image data inversely with the image encryptor 1902 (Fig. 19) in the encryption process on the basis of a decryption key, thereby obtaining a restored image from the encrypted image.

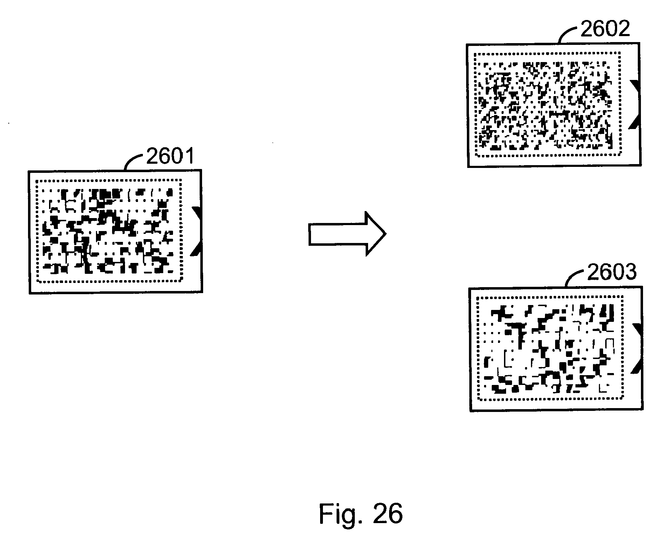

Fig. 26 is a diagram illustrating problems in multiple encryptions. According to the technology discussed in Japanese Laid-open Patent Publication No. 2008-301044 and the application technology thereof, in multiple encryptions onto a previously-encrypted image 2601, dots converted in the pixel-value conversion may not be precisely aligned and may not be decrypted from printed matters.

A multiply-encrypted image 2602, for example, has additional dots aligned due to the multiple encryptions to positions different with the dots aligned due to the first encryption. As both the dots may not be distinguished from each other in the correction of the distortion of the encrypted image, the decrypted image may deteriorate and the decryption may fail.

Further, in a multiply-encrypted image 2603, for example, pixels for the pixel-value conversion are overlapped between the first encrypted area and the additionally-encrypted area, and the dots aligned due to the first encryption are erased due to the multiple encryptions. In this case, dots required for positional correction at the time of decryption may not be sufficient, and the decryption precision therefore may deteriorate.

Hereinafter, a specific discussion will be given of embodiments of the present invention with reference to the drawings.

### First Embodiment

First of all, a discussion will be given of encryption process according to a first embodiment of the present invention.

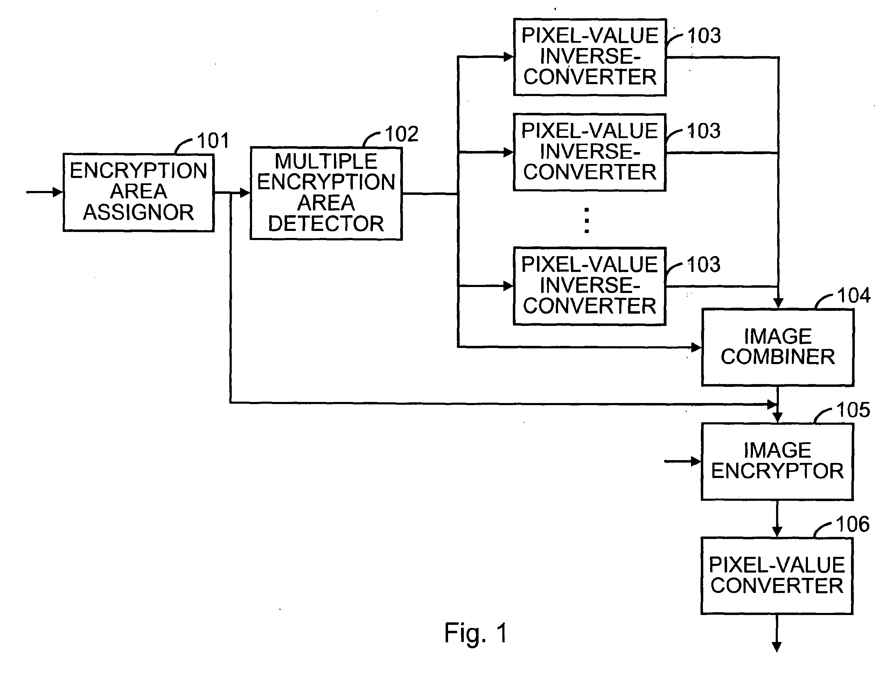

Fig. 1 is a block diagram illustrating a system configuration of an image encryption apparatus according to a first embodiment of the present invention. The image encryption apparatus includes an encryption area assignor 101, a multiple encryption area detector 102, pixel-value inverse-converters 103, an image combiner 104, an image encryptor 105, and a pixel-value converter 106. The configuration may also be realized, for example, as operations for executing a control program stored in an external storage device and a main memory by a computer with a general configuration having a central processing unit (CPU), the main memory, the external storage device, and a bus, and the like.

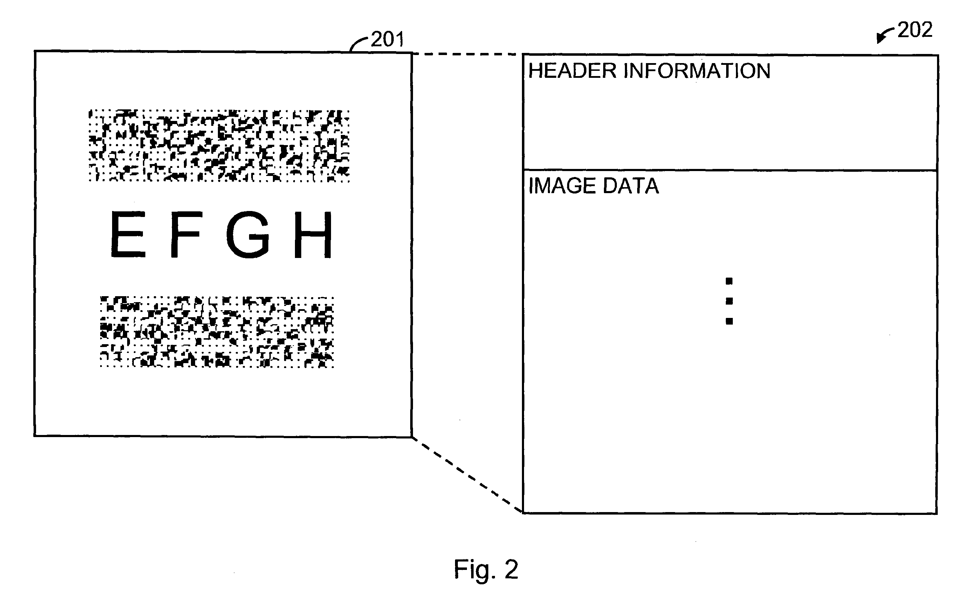

Fig. 2 is a diagram illustrating an example of a data structure of an input image according to a first embodiment of the present invention. File data 202 of an input image 201 to be encrypted is assumed to include raw pixel data without compression, as in a bit map (bmp) format.

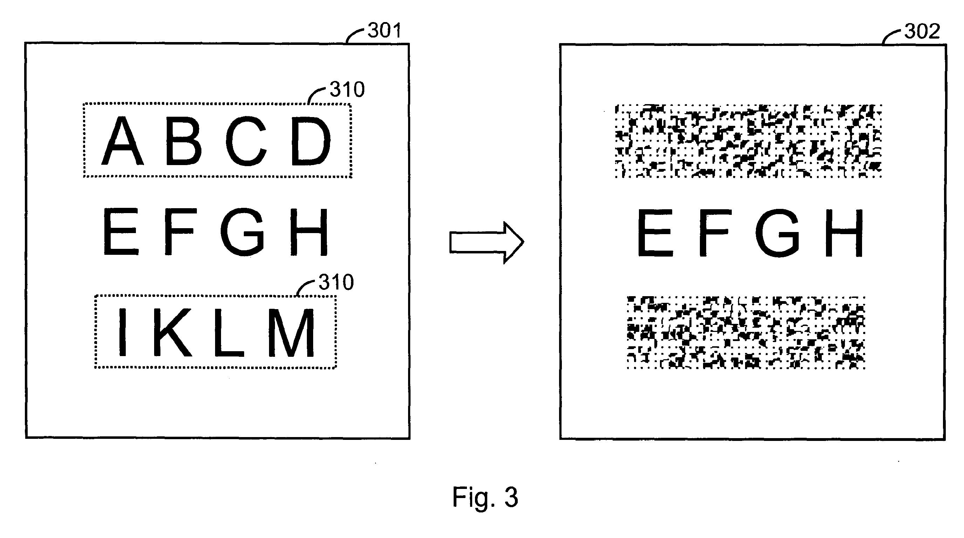

Fig. 3 is a diagram illustrating an example of generating an input image to be multiply-encrypted according to a first embodiment of the present invention. Data of an original image 301 in encryption areas 310 are encrypted to generate an encrypted image 302. Hereinafter, a specific discussion will be given of operations in an encryption process with an example of multiply-encrypting a previously-encrypted image 302.

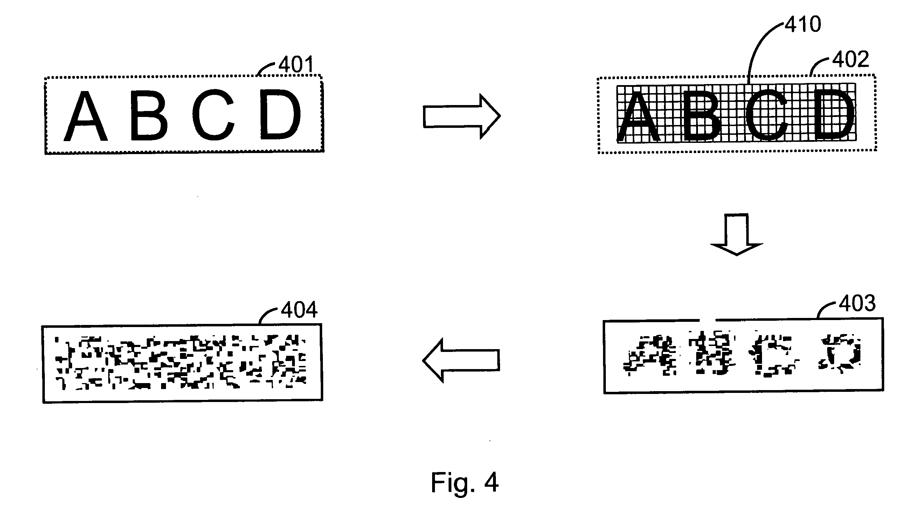

Fig. 4 is a diagram illustrating an example of operations in an encryption process according to a first embodiment of the present invention. As illustrated in Fig. 4, the encryption area is divided into small blocks. Image data of each block is reversed (geometrical reverse operation of blocks) and rotated (geometrical rotation operation of blocks on a 90-degree basis) on the basis of an encryption key. Image data of the blocks are further scrambled by exchanging positions of the blocks.

The image encryptor 105 also applies reverse/rotation operation and scramble operation on small blocks. Further, the pixel-value converter 106 converts pixel values of pixels at top-left corner of each scrambled block, similarly to the case illustrated in Fig. 22.

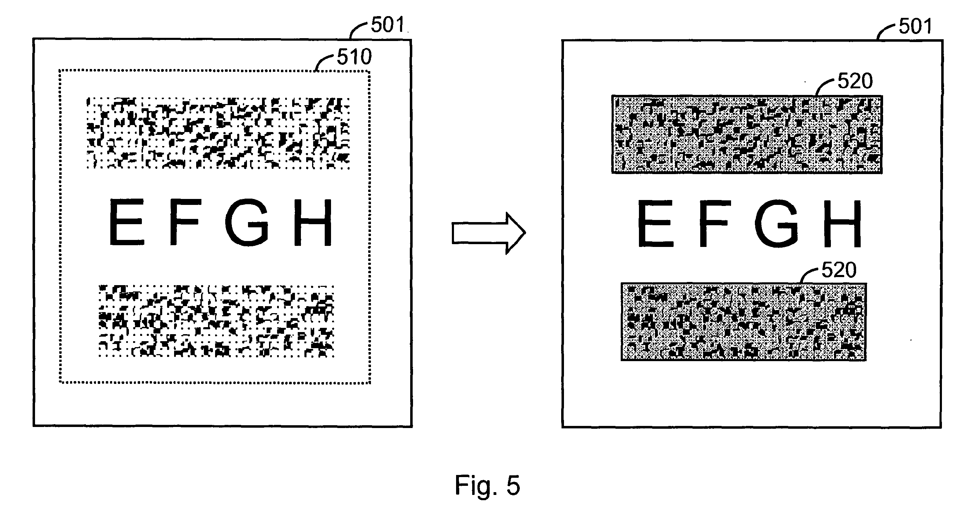

Fig. 5 is a diagram illustrating an example of operations in encryption area assignment and encrypted area detection according to a first embodiment of the present invention. The encryption area assignor 101 assigns an encryption area 510 in the input image 501 as illustrated in Fig. 5.

Subsequently, a multiple encryption area detector 102 detects previously-encrypted areas 520 included in the assigned encryption area 510. In order to detect a previously-encrypted area, features of the encrypted image may be used as in the encrypted area detector 2401 illustrated in Fig. 24. Alternatively, an encrypted area included in the assigned area may be checked on the basis of coordinate data of the encrypted image, which is stored in advance to an image header of the image file.

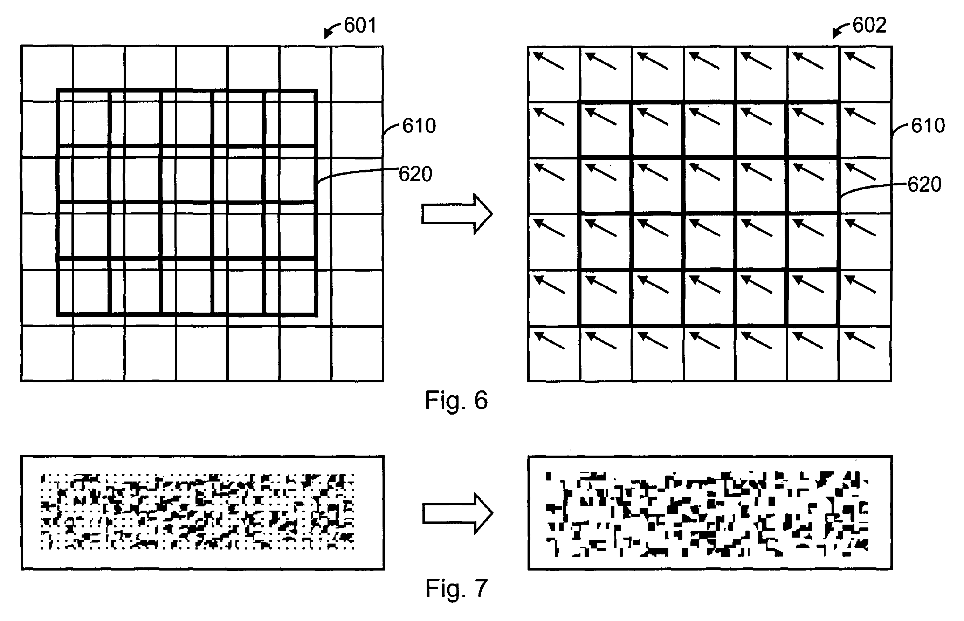

Fig. 6 is a diagram illustrating an example of operations in adjustment of start coordinates of an encryption area according to a first embodiment of the present invention. When a block boundary 610 in the assigned encryption area 510 in the scramble operation of the image encryption process is unmatched from a block boundary 620 of the previously-encrypted areas 520 like misaligned blocks 601, the start coordinates of the assigned encryption area 510 may be finely adjusted, thereby matching both the block boundaries like aligned blocks 602.

Matching of block boundaries of multiply-encrypted images advantageously prevents deterioration in quality of an image decrypted from a printed matter. When a scrambled encrypted image is printed, edges of images in contact with block boundaries are blurred to adjacent blocks, thereby causing deterioration in quality of the decrypted image. Therefore, when an image having misaligned block boundaries is multiply-encrypted, the number of block boundaries increases and image quality further deteriorates. Such a chain of deterioration in image quality does not occur if the block boundaries are matched in advance.

Subsequently, each of the pixel-value inverse-converters 103 applies inverse-conversion of predefined conversion (applied by the pixel-value converter 1903 illustrated in Fig. 19, for example) of pixel values, applied at the time of encryption, on each of the encrypted areas detected by the multiple encryption area detector 102. Fig. 7 is a diagram illustrating an example of operations in pixel-value inverse-conversion according to a first embodiment of the present invention. According to the first embodiment, pixel values of pixels at top-left corner of the scrambled blocks are converted into dots at the time of encryption. Therefore, these pixel values are converted to return to original values (or close values thereof).

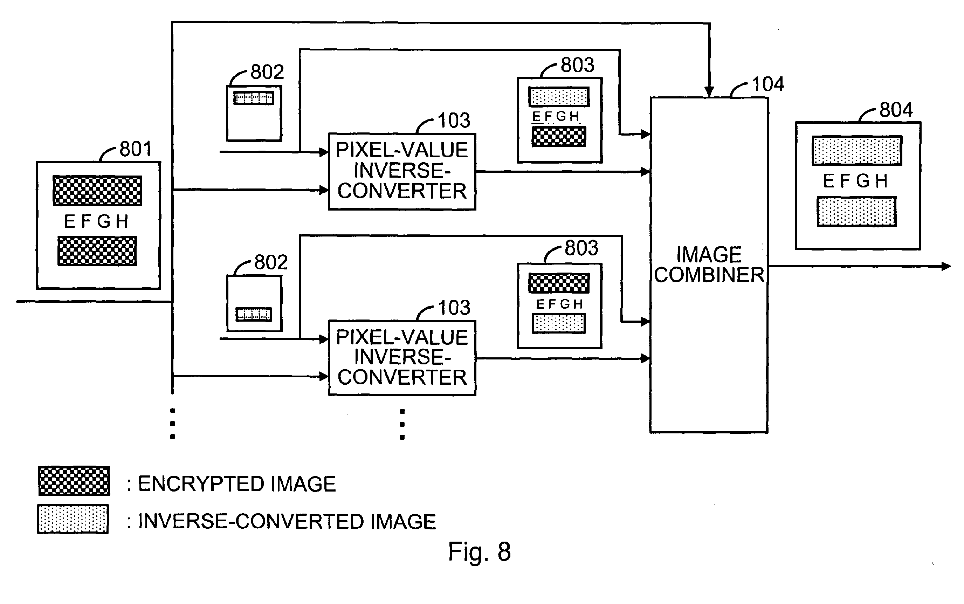

Fig. 8 is a diagram illustrating a flow of operations in pixel-value inverse-conversion and image combine according to a first embodiment of the present invention. Subsequently, the image combiner 104 superimposes, to the input image, the previously-encrypted images whose pixel values have been inversely converted by the pixel-value inverse-converters 103, thereby obtaining a ready-to-encrypt image 804.

First of all, each of the pixel-value inverse-converters 103 outputs a partially-processed image 803 including an inversely-converted image having inversely-converted pixel values of pixels in one of previously-encrypted areas specified with area data 802.

Subsequently, the image combiner 104 cuts off the inversely-converted images from the partially-processed images 803 on the basis of the area data 802, and superimposes the inversely-converted images on the input image 801 to generate a ready-to-encrypt image 804.

The inversely-converted images may be cut off before the processing of the pixel-value inverse-converters 103. By inputting only required minimum image data, efficiency of memory use in each process may increase.

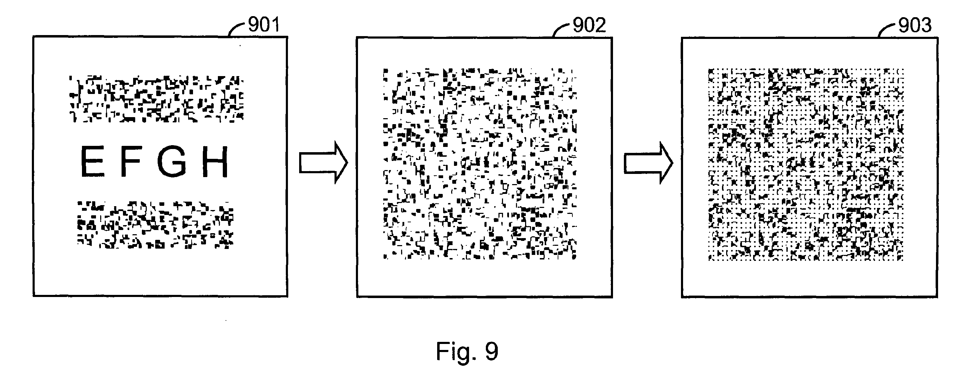

Fig. 9 is a diagram illustrating an example of operations in image encryption and pixel-value conversion according to a first embodiment of the present invention. Referring back to Fig. 1, the image encryptor 105 applies the reverse/rotation operation and the scramble operation in blocks on the ready-to-encrypt image 901 on the basis of an encryption key, as mentioned above. Thus, an encrypted image 902 is obtained.

Similarly, the pixel-value converter 106 converts pixel values of pixels into dots in each of scrambled blocks, and finally generates a multiply-encrypted image 903.

The obtained multiply-encrypted image 903 by a series of the processes mentioned above has no loss or overlap of dots like illustrated in Fig. 26. Thus, the small distortion and expansion/contraction of the printed multiply-encrypted image may be detected and corrected with the same precision as that of the single encrypted image.

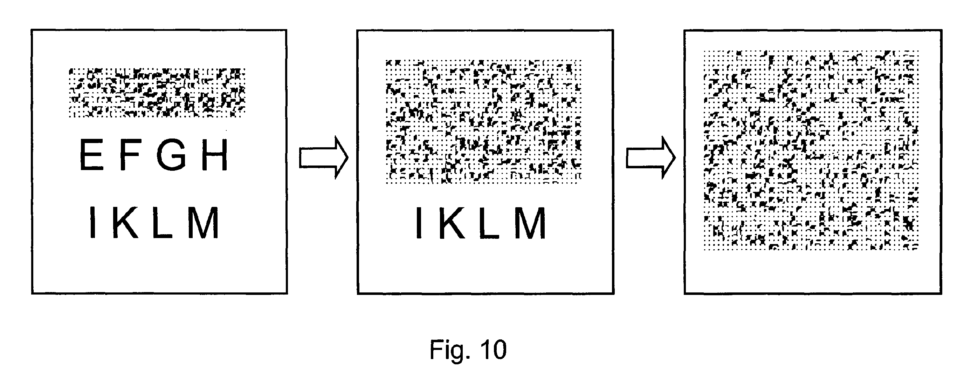

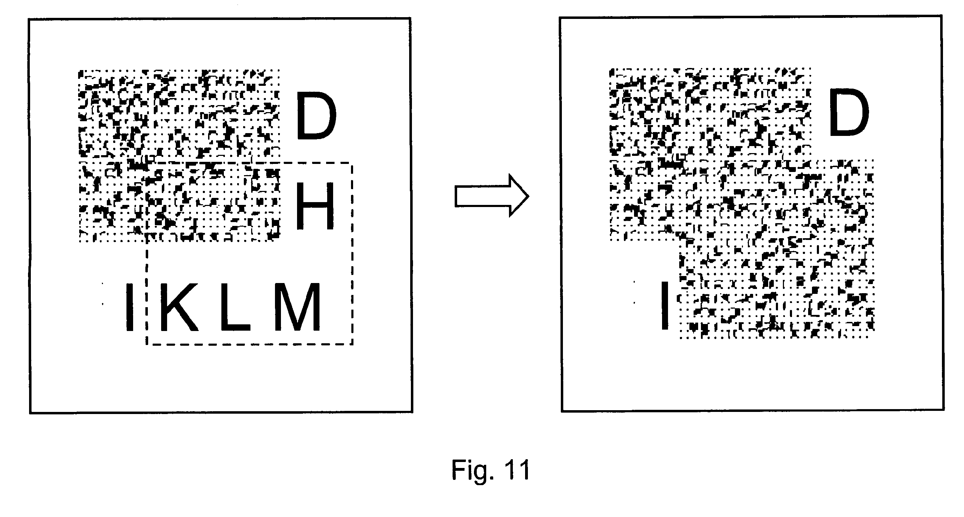

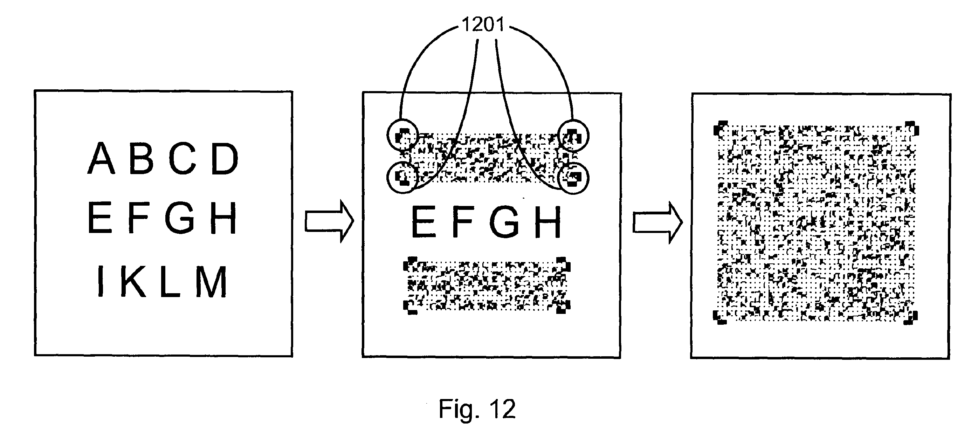

Fig. 10 is a diagram illustrating an example of multiple (triple) encryptions according to a first embodiment of the present invention. Fig. 11 is a diagram illustrating an example of multiple (partially overlapped) encryptions according to a first embodiment of the present invention. Fig. 12 is a diagram illustrating an example of adding markers 1201 for area detection at four corners of an encrypted image according to a first embodiment of the present invention.

The above-mentioned encryption process may be repeated (multiple operation of three times or more) as illustrated in Fig. 10. Further, the multiple encryptions may be applied to a part of the encrypted area as illustrated in Fig. 11.

Further, as illustrated in Fig. 12, the detection precision of the encrypted area may be improved at the time of decryption from the printed matter by adding markers 1201 for detecting the encrypted area on four corners of the encrypted area.

Details of the encryption process according to the first embodiment of the present invention are discussed above.

According to the first embodiment of the present invention, an encryption apparatus may solve the problem that the distortion and the expansion/contraction of a multiply-encrypted image may not be corrected.

### Second Embodiment

Subsequently, a discussion will be given of the decryption process according to a second embodiment of the present invention.

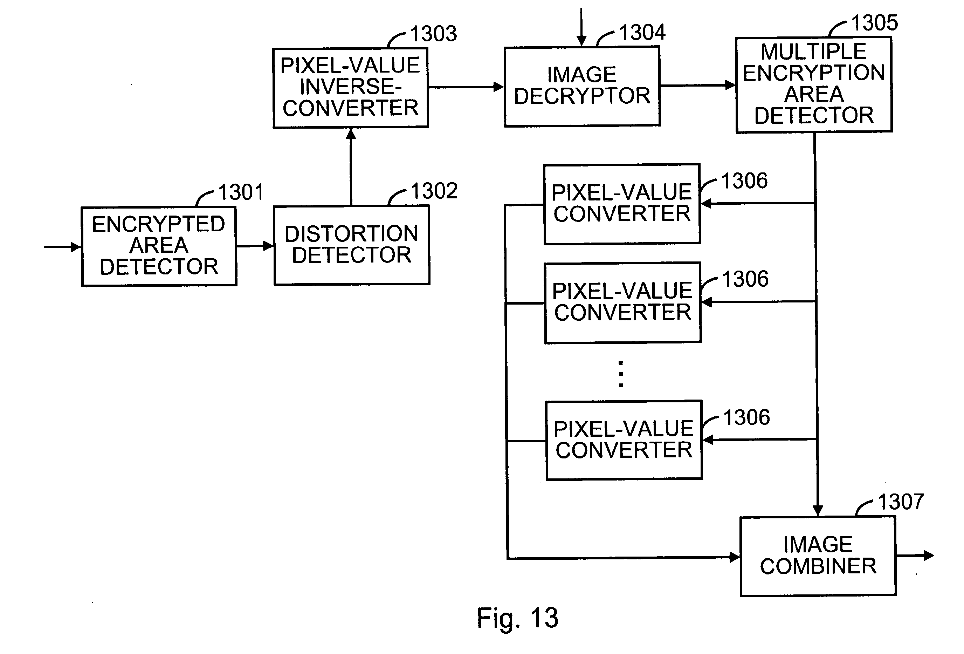

Fig. 13 is a block diagram illustrating a system configuration of an image decryption apparatus according to a second embodiment of the present invention. The image decryption apparatus includes an encrypted area detector 1301, a distortion detector 1302, a pixel-value inverse-converter 1303, an image decryptor 1304, a multiple encryption area detector 1305, pixel-value converters 1306, and an image combiner 1307. The configuration may also be realized, similarly to the configuration illustrated in Fig. 1, as operations for executing a control program stored in an external storage device and a main memory by a computer with a general configuration having a central processing unit (CPU), the main memory, the external storage device, and a bus, and the like.

Similarly to the case of the image encryption apparatus, file data of an input image to be encrypted is assumed to include raw pixel data without compression, as in a bit map (bmp) format.

Hereinafter, a specific discussion will be given of operations in a decryption process with an example of decrypting a multiply-encrypted image 903 illustrated in Fig. 9.

First of all, the encrypted area detector 1301 detects an encrypted area. The same method as that of the multiple encryption area detector 102 illustrated in Fig. 1 according to the first embodiment may be applied in the detection. Further, markers 1201 for detecting the encrypted area illustrated in Fig. 12 may be added at four corners of the encrypted image in the time of encryption, and the marker at each corner may be detected by pattern recognition, thereby identifying the encrypted area.

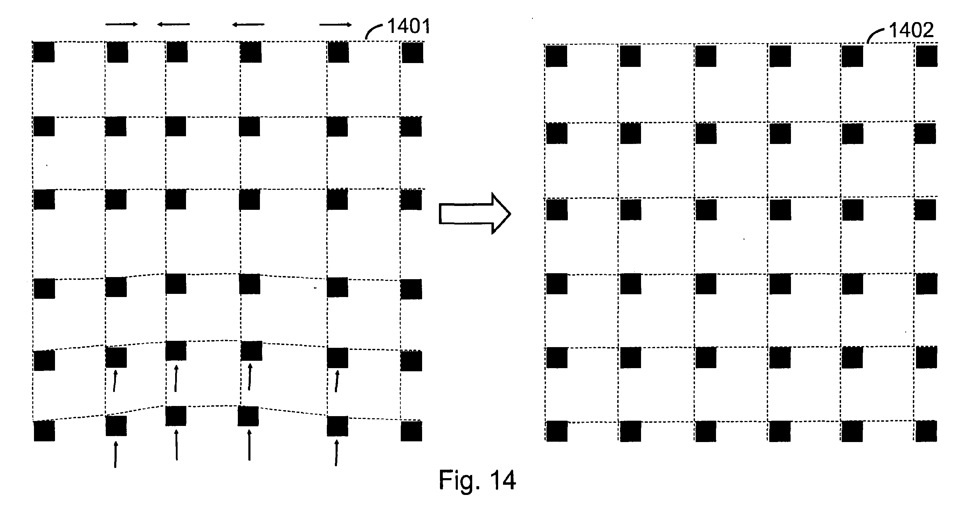

Subsequently, the distortion detector 1302 detects, on the basis of positions of the dots generated by the pixel-value converter 106 illustrated in Fig. 1 at the time of encryption, small expansion/contraction or distortion of the encrypted image caused by printing or scanning a printed matter. Fig. 14 is a diagram illustrating an example of expansion/contraction and distortion of an encrypted image caused by printing or scanning a printed matter according to a second embodiment of the present invention. In an input image 1401, dots resulted from the pixel-value conversion are slightly expanded, contracted, or distorted by printing or scanning of a printed matter. To extract the dots from the input image 1401, the following method may be employed: checking periodicity of dots on every line in the vertical and horizontal directions, identifying boundaries of divided blocks having the dot on the basis of the strength of periodicity, and detecting distortion of the dot in each block by pattern matching with the identified boundary as a reference. After detecting the distortion of the encrypted image, normalized image 1402 of the divided blocks may be generated, as needed, by correcting the distortion.

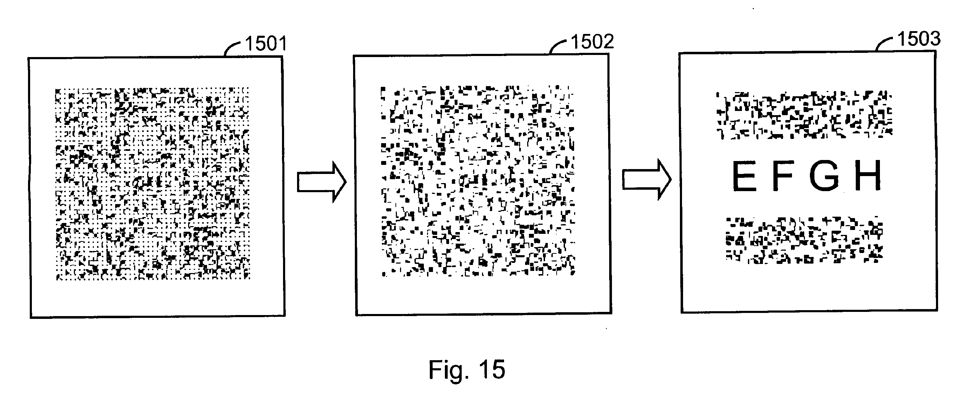

Fig. 15 is a diagram illustrating an example of operations in pixel-value inverse-conversion and image decryption according to a second embodiment of the present invention. Subsequently, the pixel-value inverse-converter 1303 inversely converts, to the original pixel value (or one close to the original pixel value), the pixel value of a dot area at the top-left corner of each scrambled block in a multiply-encrypted image 1501, which applied the pixel-value conversion at the time of encryption, thereby obtaining a dot-erased image 1502. However, dots for pixel-value conversion in the once-printed image may be blurred, and the dots may not be erased by simple inverse-conversion of pixel values. In this case, noise-reduction filtering after the inverse-conversion of the pixel value may be advantageously applied. Alternatively, the pixel value of the dot area may be advantageously interpolated on the basis of pixel values of surrounding pixels.

The image decryptor 1304 applies inverse-scramble operation and inverse-rotation/reverse operation to divided blocks of the dot-erased image 1502 on the basis of a decryption key. When the decryption key is correct, the same decrypted image 1503 as that before the encryption is obtained (obviously, the original image is not obtained when the decryption key is not correct).

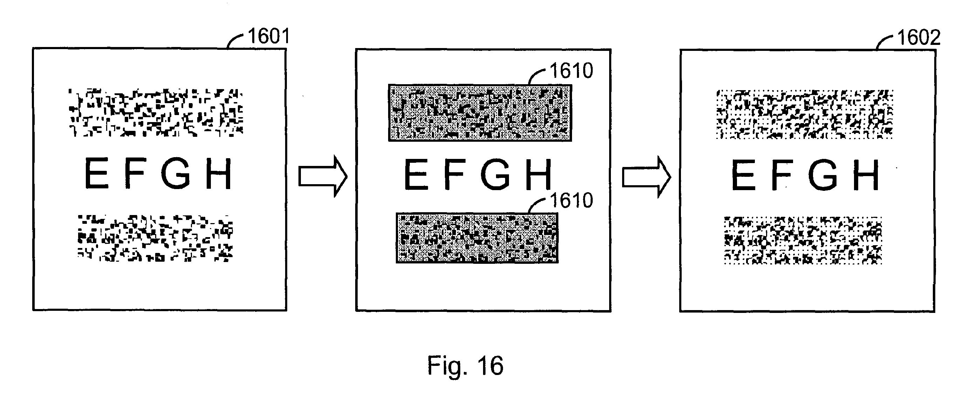

Fig. 16 is a diagram illustrating an example of operations in encryption area detection, pixel-value conversion, and image combine according to a second embodiment of the present invention. After decrypting the encrypted image, a multiple encryption area detector 1305 detects encrypted areas 1610 included in the decrypted image 1601. To detect the encrypted areas 1610, complexity of image may be checked or the markers illustrated in Fig. 12 for detecting encryption areas added at the time of encryption may be detected.

After detection of the encrypted areas 1610, subsequently, the pixel-value converters 1306 convert pixel values of dot areas on the top-left corner of each scrambled block of the detected encrypted areas 1610.

The image combiner 1307 superimposes, to the decrypted image 1601, encrypted images in the encrypted areas 1610 after pixel-value conversion to generate a previously-encrypted image 1602 having dots for pixel- value conversion.

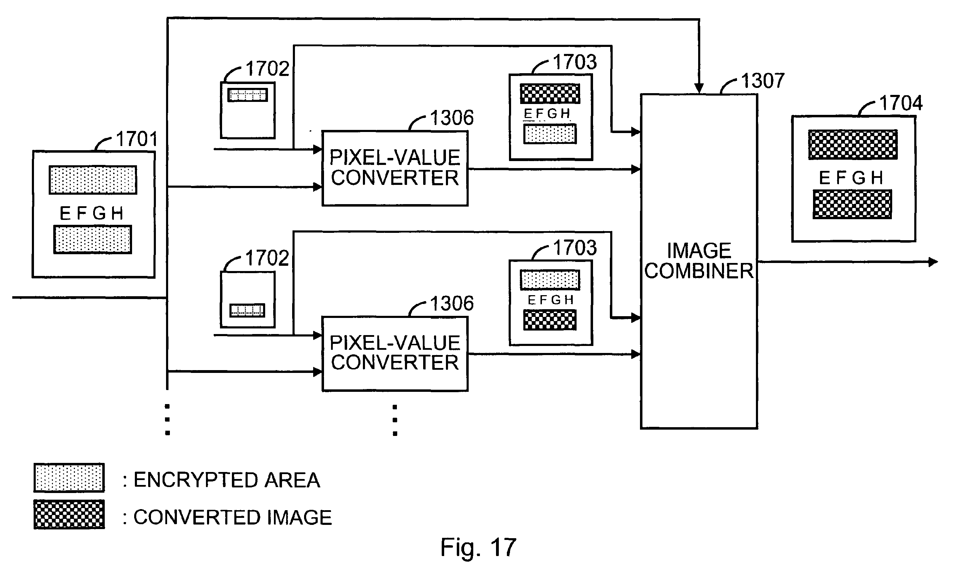

Fig. 17 is a diagram illustrating a flow of operations in pixel-value conversion and image combine according to a second embodiment of the present invention.

First of all, each of the pixel-value converters 1306 outputs a partially-processed image 1703 including a converted image having converted pixel values of pixels in one of previously-encrypted areas specified with area data 1702.

Subsequently, the image combiner 1307 cuts off the converted images from the partially-processed images 1703 on the basis of the area data 1702 and superimposes the converted images on the decrypted image 1701 to generate a previously-encrypted image 1704.

Similarly to the case of the encryption process illustrated in Fig. 8, for the purpose of increasing the efficiency of memory use, the converted images may be cut off before the processing of the pixel-value converters 1306.

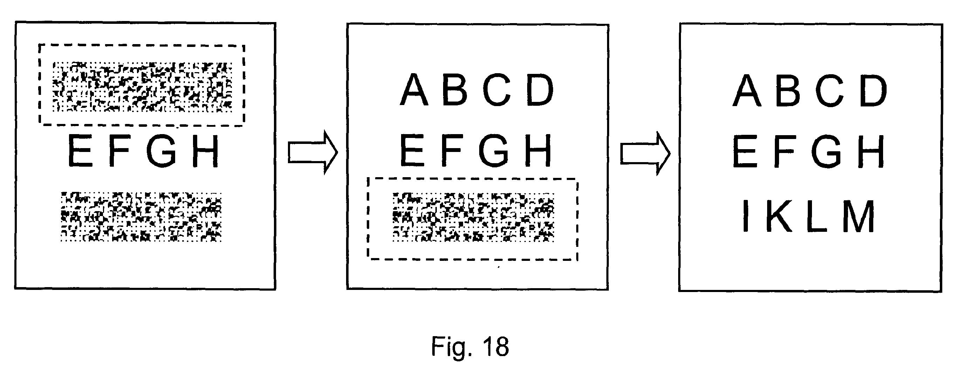

Fig. 18 is a diagram illustrating an example of operations in iterative decryption according to a second embodiment of the present invention. The multiply-encrypted image obtained after the decryption process may be iteratively decrypted as illustrated in Fig. 18, thereby generating an original image including no encrypted image.

According to the decryption process discussed above, even when only upper encrypted images of a multiply-encrypted image are decrypted and lower encrypted images are remained, a pattern for pixel-value conversion (a dot in each block according to the second embodiment) is always properly generated as an index for correcting expansion/contraction and distortion. Therefore, even when the lower encrypted images are re-printed in a non-decrypted state, high precision decryption may be possible.

Details of the decryption process according to the second embodiment of the present invention are discussed above.

According to the second embodiment, the deterioration in quality of a decrypted image may be suppressed upon decrypting the multiply-encrypted image.

Furthermore, according to the second embodiment of the present invention, with respect to encrypted images included in a decrypted image, a pattern for converting pixel values as an index for correcting distortion and expansion/contraction is always properly generated. Therefore, even upon reprinting encrypted image data included after decryption, the encrypted image data may be decrypted with high precision.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. An image encryption apparatus for encrypting image data of an input image, said image encryption apparatus comprising:
an encryption area assignor for assigning an encryption area on the input image, image data in said encryption area being to be encrypted;
a multiple encryption area detector for detecting a previously encrypted area in an assigned encrypted area;
a pixel-value inverse-converter for applying pixel-value inverse-conversion on a pixel of the input image in a detected previously encrypted area, said pixel has been applied with pixel-value conversion;
an image encryptor for encrypting image data of the input image in the assigned encrypted area, a pixel of said input image has been applied with the pixel-value inverse-conversion; and
a pixel-value converter for applying the pixel-value conversion on a pixel of an encrypted image to generate a multiply-encrypted image.

2. An image encryption apparatus for encrypting image data of an input image, said image encryption apparatus comprising:
an encryption area assignor for assigning an encryption area on the input image, image data in said encryption area being to be encrypted;
a multiple encryption area detector for detecting a previously encrypted area in an assigned encrypted area;
an encryption area adjuster for adjusting the encryption area on the basis of data of a detected previously encrypted area;
an image encryptor for encrypting image data of the input image in the assigned encrypted area; and
a pixel-value converter for applying pixel-value conversion on a pixel of an encrypted image to generate a multiply-encrypted image.

3. The image encryption apparatus of claim 1, further comprising:
an encryption area adjuster for adjusting the encryption area on the basis of data of the detected previously encrypted area.

4. An image decryption apparatus for decrypting image data of the multiply-encrypted image generated by the image encryption apparatus of claim 1, said image decryption apparatus comprising:
an encrypted area detector for detecting an encryption area in the multiply-encrypted image;
a pixel-value inverse-converter for applying the pixel-value inverse-conversion on a pixel of the multiply-encrypted image in a detected encryption area, said pixel has been applied with the pixel-value conversion;
an image decryptor for decrypting image data of the multiply-encrypted image in the detected encryption area, a pixel in said image data has been applied with the pixel-value inverse-conversion to generate a decrypted image;
a multiple encryption area detector for detecting the previously encrypted area of the decrypted image; and
a pixel-value converter for applying the pixel-value conversion on a pixel of the decrypted image in the previously encrypted area to generate a previously-encrypted image.

5. The image decryption apparatus of claim 4, further comprising:
a distortion detector for detecting expansion/contraction or distortion of the multiply-encrypted image in the detected encryption area,
wherein
said pixel-value inverse-converter applies the pixel-value inverse-conversion while adjusting detected expansion/contraction or distortion.

6. The image decryption apparatus of claim 5, wherein
said distortion detector detects expansion/contraction or distortion of the multiply-encrypted image in the detected encryption area on the basis of a pattern resulted from the pixel-value conversion applied by the image encryptor.

7. An image encryption method performed by an image encryption apparatus for encrypting image data of an input image, said image encryption method comprising:
assigning an encryption area on the input image, image data in said encryption area being to be encrypted;
detecting a previously encrypted area in an assigned encrypted area;
applying pixel-value inverse-conversion on a pixel of the input image in a detected previously encrypted area, said pixel has been applied with pixel-value conversion;
encrypting image data of the input image in the assigned encrypted area, a pixel of said input image has been applied with the pixel-value inverse-conversion; and
applying the pixel-value conversion on a pixel of an encrypted image to generate a multiply-encrypted image.

8. An image decryption method performed by an image decryption apparatus for decrypting image data of the multiply-encrypted image generated by the image encryption method of claim 7, said image decryption method comprising:
detecting an encryption area in the multiply-encrypted image;
applying the pixel-value inverse-conversion on a pixel of the multiply-encrypted image in a detected encryption area, said pixel has been applied with the pixel-value conversion;
decrypting image data of the multiply-encrypted image in the detected encryption area, a pixel in said image data has been applied with the pixel-value inverse-conversion to generate a decrypted image;
detecting the previously encrypted area of the decrypted image; and
applying the pixel-value conversion on a pixel of the decrypted image in the previously encrypted area to generate a previously-encrypted image.
